Europäisches Patentamt

European Patent Office

Office européen des brevets

(19)

(11) Veröffentlichungsnummer: **0 201 845**

**A1**

(12) # EUROPÄISCHE PATENTANMELDUNG

(21) Anmeldenummer: 86106174.5

(22) Anmeldetag: 06.05.86

(51) Int. Cl.4: **B29C 47/68** , B29C 47/14

(30) Priorität: 09.05.85 CH 1964/85

(43) Veröffentlichungstag der Anmeldung:
20.11.86 Patentblatt 86/47

(84) Benannte Vertragsstaaten:
AT DE FR GB IT

(71) Anmelder: **Huemer, Franz X.**
**Sonnenuhrgasse 4**
**A-1060 Wien(AT)**

(72) Erfinder: **Huemer, Franz X.**
**Sonnenuhrgasse 4**
**A-1060 Wien(AT)**

(74) Vertreter: **Petschner, Goetz**
**Patentanwaltsbüro G. Petschner**
**Seidengasse 18**
**CH-8001 Zürich(CH)**

(54) Extrusionsanlage zur Herstellung von Folien aus Kunststoff.

(57) Bei der Extrusionsanlage für Kunststoff-Folien ist einem Glättwalzwerk (2) eine Vorrichtung (1) zur Extrusion eines warmweichen Kunststoffes zugeordnet, in deren Plastifizierungszylinder (3) der Kunststoff auf Verarbeitungstemperatur gebracht und aus diesem mittels Förderschnecke (5) durch eine Breitschlitzdüse (6) hindurch herausbefördert wird, wobei der Breitschlitzdüse ein verschiebbares Filterband - (8) vorgeschaltet ist. Hierbei weist das Filterband (8) eine Breite von wenigstens angenähert der Breite der Breitschlitzdüse (6) auf und ist quer zur Längserstreckung der Düse (6) verschiebbar angeordnet.

Durch diese Massnahmen ergibt sich eine Extrusionsanlage zur Herstellung von Folien aus Kunststoff, welche bei geringstem Filterverbrauch und optimaler und funktionssicherer Ansteuerung die Erzeugung einer hochqualitativen Folie erlaubt.

EP 0 201 845 A1

Extrusionsanlage zur

Herstellung von Folien aus

Kunststoff

Die vorliegende Erfindung betrifft eine Extrusionsanlage zur Herstellung von Folien aus Kunststoff, insbesondere für deren Weiterverarbeitung zu verwebbaren Bändchen, mit einer, einem Glättwalzwerk zugeordneten Vorrichtung zur Extrusion eines warmweichen Kunststoffes, in deren Plastifizierungszylinder der Kunststoff auf Verarbeitungstemperatur gebracht und aus diesem mittels Förderschnecke durch eine Breitschlitzdüse hindurch herausbefördert wird, wobei der Breitschlitzdüse ein verschiebbares Filterband vorgeschaltet ist.

Bei Einrichtungen dieser Art ist es üblich, das Filterband gemäss der Technik des Strangpressens von durch Wärme weichgemachter Thermoplaste horizontal zu verschieben, um jeweils einen von Verunreinigungen durchsetzten Filterabschnitt durch einen noch sauberen Teil zu ersetzen.

Diese Technik führt aber bei Einrichtungen mit Breitschlitzdüsen für die Folienherstellung, bei denen der Düsenschlitz eine vergleichsweise sehr grosse Breite und somit das wirksame Filterband eine unverhältnismässig grosse Länge aufweist, zu einem vermehrten Filterverschluss auf der Filterbandaustrittsseite, da das Filterband nur sehr langsam quer zur Strömmungsrichtung des warmweichen Thermoplast bewegt werden kann und so praktisch nie an allen Stellen vor dem Düsenschlitz gleiche Durchtrittsverhältnisse herrschen. Damit erfolgt aber auch ein ungleichmässiger Durchtritt der warmweichen Kunststoffmasse durch den Filter bzw. nachfolgend durch die Breitschlitzdüse mit dem Ergebnis einer ungleichen Folie.

Es ist nun Aufgabe der Erfindung, eine Extrusionsanlage der vorgenannten Art so auszugestalten, dass der sich vor der Breitschlitzdüse befindliche Filterbandabschnitt immer gleichmässig durchsetzt wird, um so auch zu einem an jeder Stelle des Düsenschlitzes gleichen Durchsatz zu gelangen mit dem Ergebnis einer Folie höchster Genauigkeit und Qualität.

Dies wird erfindungsgemäss zunächst dadurch erreicht, dass das Filterband eine Breite von wenigstens angenähert der eingangsseitigen Breite der Breitschlitzdüse aufweist und quer zur Längserstreckung der Düse verschiebbar angeordnet ist.

Obwohl hier nun ein relativ sehr breites Filterband gemäss der Breite der Breitschlitzdüse notwendig ist, bedarf es nunmehr nur noch einen sehr kleinen Verschiebungsweg für das Filterband entsprechend der eintrittsseitigen Dicke der Schlitzdüse, was gewährleistet dass praktisch gleichzeitig an allen Stellen des Thermoplast-Durchtrittes die verunreinigten Filterbandabschnitte durch noch saubere Abschnitte ersetzt werden können. Damit ist die Erzeugung einer hochqualitativen Folie gewährleistet. Zudem erlaubt der kurze Verschiebungsweg des Filterbandes grössere Verschiebungsintervalle, was die Ansteuerung der Verschiebungsmittel erleichtert.

Bei solchen Extrusionsanlagen ist es üblich, im Förderweg des warmweichen Kunststoffes mindestens ein Druckfühler zur Erzeugung eines das Filterband weiterschiebenden Steuersignals vorzusehen. Da nun aber einerseits durch den geringen Verschiebungsweg des Filterbandes die Verschiebungszeit vergleichsweise sehr kurz ist, andrerseits sich aber der vom verstopften Filterabschnitt erzeugte Staudruck der warmweichen Kunststoffmasse vor dem Filter nur sehr langsam wieder abbaut, müssen Massnahmen getroffen werden, die ein Dauersignal infolge ständiger Schwellwertüberschreitung der vom Druckfühler festgestellten Druckerhöhung verhindern.

Dies wird erfindungsgemäss dadurch erreicht, dass dem, den Motorantrieb für den Weitertransport des Filterbandes auf ein Steuersignal der Druckfühleranordnung schaltenden Schaltkreis eine zeitabhängige Ueberbrückungsschaltung zugeordnet ist.

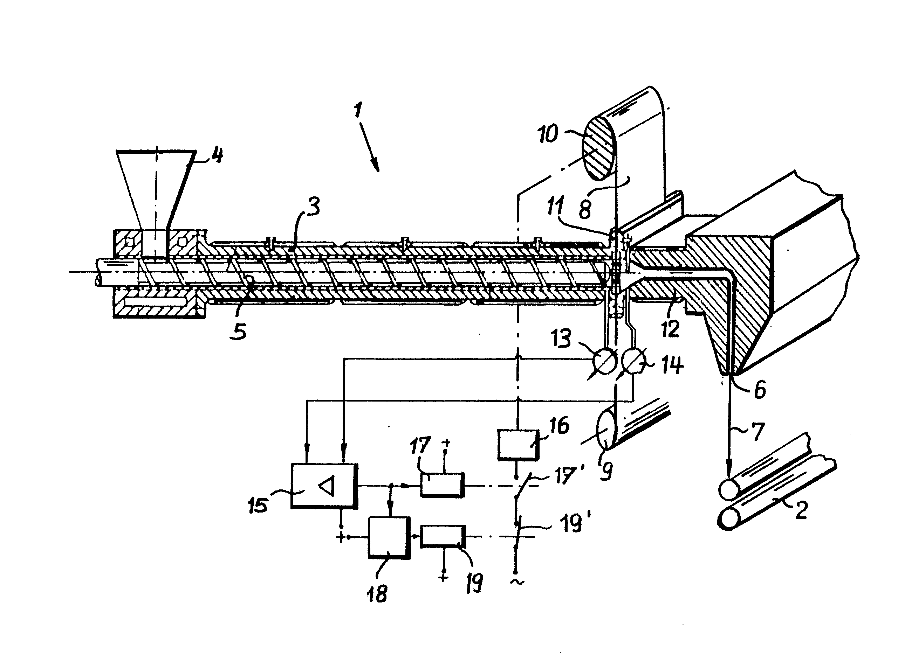

Eine beispielsweise Ausführungsform des Erfindungsgegenstandes ist nachfolgend anhand der Zeichnung, welche in schaubildartiger Darstellung das Prinzip einer Extrusionsanlage zur Herstellung von Folien aus Kunststoff, insbesondere für deren Weiterverarbeitung zu verwebbaren Bändchen zeigt, näher erläutert.

Gemäss der Darstellung umfasst die erfindungsgemässe Extrusionsanlage eine Vorrichtung 1 zur Extrusion eines warmweichen Kunststoffes, welche einem Glättwalzwerk 2 zugeordnet ist.

Die Vorrichtung 1 umfasst zunächst einen heizbaren Plastifizierungszylinder 3, in dem der durch den Einfülltrichter 4 einbringbare granulare Kunststoff auf Verarbeitungstemperatur gebracht und aus diesem mittels einer Förderschnecke 5 durch eine sogenannte Breitschlitzdüse 6 hindurch herausbefördert wird. Die aus der Breitschlitzdüse 6 austretende Kunststoff-Folie 7 gelangt dann zu den Walzen des Glättwalzwerkes 2, oder einem Kühlbecken oder dgl. um von dort zur Weiterverarbeitung zu gelangen.

Der Breitschlitzdüse 6 ist ein verschiebbares Filterband 8 vorgeschaltet welches der Entfernung von Verunreinigungen aus der geförderten warmweichen Kunststoffmasse dient und welches temporär von einer Vorratsrolle 9 abgezogen und auf eine hier motorisch antreibbare Abzugsrolle 10 aufgewickelt wird. Hierbei wird das Filterband 8 in einem Gehäuse 11 zwischen dem Plastifizierungszylinder 3 und dem Gehäuse 12 der Breitschlitzdüse 6 geeignet geführt. Hierbei können, wie bekannt, die Durchtrittsbereiche für das Filterband 8 eingangsseitig der Breitschlitzdüse 6 mit Heizmitteln ausgerüstet sein, um dort Anteile des verarbeiteten Kunststoffes, welcher an diesen Stellen Dichtungsmittel bildet, für das Weiterverschieben des Filterbandes temporär aufzuweichen, was hier nicht näher gezeigt ist.

Vergleichsweise bekannten Anordnungen dieser Art ist es hier von erfinderischer Bedeutung, dass das Filterband 8 eine Breite von wenigstens angenähert der eingangsseitigen Breite bzw. Schlitzlänge der Breitschlitzdüse 6 aufweist und quer zur Längserstreckung der Düse 6 verschiebbar angeordnet ist. Erstreckt sich also die Breitschlitzdüse 6 horizontal, was die Regel ist, wird das filterband 8 vertikal von oben nach unten oder von unten nach oben durch das Gehäuse 11 hindurchgezogen, wie das die Darstellung deutlich erkennen lässt.

Wie vorerwähnt, erfordert diese Anordnung nur noch sehr kleine Verschiebungswege des Filterbandes entsprechend der eintrittsseitigen Dicke der Schlitzdüse 6 vergleichsweise einer Filterbandverschiebung in der Längserstreckung der Düse. Dies bedeutet, dass mit einer filterbandverschiebung sofort und an allen Stellen der Düse 6 gleichzeitig ein noch sauberer Filterbandabschnitt in den Förderweg des warmweichen Kunststoffes gebracht wird, womit die bisher nicht beherrschbaren Ungleichmässigkeiten der Durchtrittsverhältnisse mit der Folge ungleichmässiger Folien eliminiert sind.

In bekannter Weise wird auch hier vor und nach dem Filterband 8 im Förderweg der warmweichen Kunststoffmasse Druckfühler 13 und 14 eingesetzt, um anhand der Druckdifferenzen festzustellen, wann der betreffende Filterbandabschnitt soweit mit Schmutzpartikel verstopft ist dass dieser ausgewechselt werden muss.

Da nun aber wie bereits erwähnt, einerseits durch den geringen Verschiebungsweg des Filterbandes die Verschiebungszeit vergleichsweise sehr kurz ist, andrerseits sich aber der vom verstopften Filterabschnitt erzeugte Staudruck der warmweichen Kunststoffmasse vor dem Filter nur sehr langsam wieder abbaut, müssen Massnahmen getroffen werden, die ein Dauersignal infolge ständiger Schwellwertüberschreitung der von den Druckfühlern festgestellten Druckdifferenzen verhindern.

Entsprechend ist eine Zeit-Ueberbrückungsschaltung vorgesehen, bei der das Ausgangssignal eines den Druckfühlern 13 und 14 nachgeschalteten Druckdifferenzgliedes 15 zu einem ersten Schaltrelais 17 sowie über ein Zeitglied 18 zu einem Verzögerungs-Schaltrelais 19 gelangt. Das erste Schaltrelais 17 schaltet auf ein Signal des Druckdifferenzgliedes 15 hin den Motor 16 für den Weitertransport des Filterbandes 8, der ein Schrittmotor sein kann, über einen Schalter 17' ein. Nach einem Intervall, welcher dem erforderlichen Verschiebungsweg des Filterbandes 8 entspricht, - schaltet das Verzögerungs-Schaltrelais 19 über einen weiteren Schalter 19' den Motor 16 wieder ab. Dieses Verzögerungs-Schaltrelais 19 wird dann vom Zeitglied 18 über eine Zeit erregt und somit der Schalter 19' offengehalten, bis sich die den Impuls auslösenden Druckverhältnisse am Filterband normalisiert haben. Beispielsweise kann das Verzögerungs-Schaltrelais 19 vom Zeitglied 18 einen Haltestrom von 50 sec. erhalten, wonach dann erst der Motor 16 vom Druckdifferenzglied 15 wieder eingeschaltet werden kann.

Selbstverständlich sind aber auch andere Mittel zur Herstellung der genannten Ueberbrückungsschaltung denkbar.

Aus dem Vorbeschriebenen ergibt sich somit eine Extrusionsanlage zur Herstellung von Folien aus Kunststoff, welche bei geringstem Filterverbrauch und optimaler und funktionssicherer Ansteuerung die Erzeugung einer hochqualitativen Folie erlaubt.

## Ansprüche

1. Extrusionsanlage zur Herstellung von Folien aus Kunststoff, insbesondere für deren Weiterverarbeitung zu verwebbaren Bändchen, mit einer, einem Glättwalzwerk oder dgl. zugeordneten Vorrichtung zur Extrusion eines warmweichen Kunststoffes, in deren Plastifizierungszylinder der Kunststoff auf Verarbeitungstemperatur gebracht und aus diesem mittels Förderschnecke durch eine Breitschlitzdüse hindurch herausbefödert wird, wobei der Breitschlitzdüse ein verschiebbares Filterband vorgeschaltet ist, dadurch gekennzeichnet, dass das Filterband (8) eine Breite von wenigstens angenähert der eingangsseitigen Breite der Breitschlitzdüse - (6) aufweist und quer zur Längserstreckung der Düse (6) verschiebbar angeordnet ist.

2. Extrusionsanlage, bei welcher sich im Förderweg des warmweichen Kunststoffes mindestens ein Druckfühler zur Erzeugung eines das Filterband weiterschiebenden Steuersignals befindet, dadurch gekennzeichnet, dass dem, den Motorantrieb (16) für den Weitertransport des filterbandes (8) auf ein steuersignal der Druckfühleranordnung (13 -15) - schaltenden Schaltkreis (17 -19) eine zeitabhängige Ueberbrückungsschaltung (18,19) zugeordnet ist.

Europäisches
Patentamt

# EUROPÄISCHER RECHERCHENBERICHT

Nummer der Anmeldung

EP 86 10 6174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 706 827 (NOTT)<br>* Abbildungen 1,2; Spalte 3, Zeilen 52-60 * | 1 | B 29 C 47/68<br>B 29 C 47/14 |
| A | FR-A-1 527 722 (GARRET)<br>* Abbildungen 1,2 * | 1 | |
| A | US-A-2 061 042 (PARKHURST)<br>* Abbildungen 1,2 * | 1 | |
| A | US-A-3 112 525 (MOZIEK)<br>* Abbildungen I-VI * | 1 | |
| A | US-A-3 855 126 (SMITH)<br>* Insgesamt * | 1 | |
| | | | RECHERCHIERTE SACHGEBIETE (Int. Cl.4) |
| A | US-A-3 783 355 (KALMANN)<br>* Insgesamt * | 1 | B 29 C 47/00<br>B 01 D 29/00 |

Der vorliegende Recherchenbericht wurde für alle Patentansprüche erstellt.

| Recherchenort | Abschlußdatum der Recherche | Prüfer |
|---|---|---|
| DEN HAAG | 12-08-1986 | KUSARDY R. |

EPA Form 1503 03 82